# FASCICULE DE BREVET EUROPEEN

(11) **EP 2 627 524 B1**
(45) Date de publication et mention de la délivrance du brevet: **25.02.2015**
(21) Numéro de dépôt: 11771106.9
(22) Date de dépôt: 13.10.2011
(51) Int. Cl.: B60C 11/04, B60C 11/12

(54) **PERFECTIONNEMENT AUX DISPOSITIFS ATTÉNUATEURS DE BRUIT POUR PNEU**
VERBESSERTE GERÄUSCHDÄMPFER FÜR REIFEN
IMPROVEMENT TO NOISE ATTENTUATOR DEVICES FOR TYRES

(30) Priorité: 14.10.2010 FR 1058392
(43) Date de publication de la demande: 21.08.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BERVAS, Patrick, F-63040 Clermont-Ferrand Cedex 09 (FR); FAURE, Jean-Claude, F-63040 Clermont-Ferrand Cedex 09 (FR)
(74) Mandataire: Diernaz, Christian
(86) Numéro de dépôt international: PCT/EP2011/067939
(87) Numéro de publication internationale: WO 2012/049274

(56) Documents cités:
- FR-A1- 2 926 037

## Description

### DOMAINE DE L'INVENTION

La présente invention concerne les bandes de roulement de pneu et plus particulièrement des dispositifs intégrés à ces bandes permettant une réduction des bruits en roulage.

### ÉTAT DE LA TECHNIQUE

De façon usuelle, les pneus pour véhicule de tourisme sont pourvus d'une armature de carcasse qui est aujourd'hui radiale en grande majorité ; dans cette configuration, les renforts de l'armature de carcasse sont disposés de façon à faire un angle supérieur ou égal à 80 degrés avec la direction circonférentielle (ce qui revient à dire que les renforts sont contenus dans un plan radial (plan contenant l'axe de rotation) ou font avec ce plan radial une inclinaison d'au plus 20 degrés.

De façon usuelle, ces pneus sont pourvus d'une armature de sommet comportant une pluralité de renforts noyés dans un matériau à base d'élastomère. Cette armature de sommet est recouverte radialement à l'extérieur par une bande de roulement en matériau caoutchoutique, cette bande ayant une surface, dite surface de roulement, destinée à être en contact avec la route pendant le roulage.

Afin d'assurer un niveau de sécurité indispensable par temps de pluie notamment, il est usuel de pourvoir la bande de roulement avec une pluralité de rainures d'orientation générale circonférentielle (ou longitudinale) et de rainures d'orientation générale transversale (parallèles à ou faisant un angle faible avec l'axe de rotation).

Un inconvénient de la présence de rainures longitudinales est la génération de vibrations de l'air circulant dans ces rainures notamment dans le contact avec la route. Ces vibrations sont à l'origine de résonances générant un bruit en roulage.

La publication de demande de brevet JP-O1-191734 s'intéresse à ce mécanisme et propose de réduire le bruit généré par l'air vibrant à l'intérieur de ces rainures dans en formant dans l'épaisseur de la bande de roulement d'un pneu pour véhicule poids lourd des cavités sphériques débouchant par un canal de section réduite dans une rainure longitudinale. Par ce moyen, il est possible de mettre en oeuvre une sorte de résonateur fonctionnant sur le principe d'un résonateur de Helmholtz. En effet, une telle cavité par son volume, précisément déterminé, joue ce rôle et permet de réduire l'effet de certaines des fréquences de vibration de l'air circulant dans les rainures lors du passage dans le contact avec la chaussée. Pour chaque fréquence choisie, le volume de ces cavités doit être approprié. L'application aux pneus pour véhicule poids lourd est possible puisque, en règle générale, l'épaisseur des éléments de la bande de roulement est importante comparée à celle des bandes de roulement de pneus pour véhicules de tourisme.

Pour un véhicule de tourisme, l'épaisseur de bande de roulement étant relativement faible (c'est-à-dire inférieure à 10 mm), il devient impératif de mettre ces résonateurs le plus loin possible de la surface de roulement de la bande de roulement et plus particulièrement à une profondeur supérieure à la profondeur des rainures, ou à tout le moins à la profondeur desdites rainures réduite de la quantité légalement imposée (signalée par les indicateurs d'usure qui sont des plots de gomme prévus au fond des rainures et dont la surface radialement à l'extérieur indique la limite d'usure de la bande à ne pas dépasser afin de conserver un niveau de sécurité satisfaisant). Si dans le cas de pneus destinés à équiper un véhicule poids lourd tels que décrits dans JP-01-191734, il semble possible de mouler et de démouler un pneu avec les éléments de moule moulant les cavités hémisphériques, ces cavités s'ouvrant dans des rainures, cela devient difficile avec des pneus pour véhicules de tourisme ne serait-ce que par la longueur importante de ces cavités (longueur nécessaire pour obtenir un volume approprié).

Un autre inconvénient de la bande de roulement décrite dans le document JP-01-191734 réside dans le fait que la cavité sphérique de volume relativement important peut affecter la façon dont l'élément de gomme qui la contient va s'écraser contre le sol pendant le roulage et notamment la répartition des pressions de contact. Par ailleurs, les cavités de JP-01-191734 ne présentent pas une pérennité satisfaisante puisque après une usure partielle de la bande, ces cavités débouchent sur la surface de roulement : le volume n'est plus conservé et le fonctionnement en tant que résonateur s'en trouve perturbé.

Les demanderesses ont proposé dans une demande de brevet publiée sous le numéro WO 2009/095288, une nouvelle bande de roulement comprenant des cavités formant des résonateurs pour atténuer le bruit de résonance de rainure au passage dans le contact avec une chaussée. Ces cavités sont formées pour être à la fois quasiment insensible à l'usure de la bande et pour être facilement moulées et démoulées, tout en assurant une excellente maîtrise du volume de chaque cavité afin de pouvoir jouer pleinement le rôle de résonateur pour une fréquence de résonance fixée. Par quasiment insensible, on entend que le volume des cavités est inchangé jusqu'à ce que l'usure de la bande atteigne les 2/3 de l'épaisseur de ladite bande. Après cette usure, les cavités s'ouvrent sur la surface de roulement pour former des portions de rainures servant de réservoir pour l'eau présente sur la chaussée. Les résonateurs dont il est fait état peuvent être de type Helmholtz ou de type quart d'onde comme généralement connus.

La mise en place de résonateurs de type Helmholtz ou de type quart d'onde dans des bandes de roulement de pneu pour véhicules de tourisme nécessite un volume de creux approprié qui est parfois incompatible avec l'épaisseur de cette bande et les dimensions de largeur des nervures ou éléments de relief de la bande. Ce volume de cavités peut générer une réduction significative de la rigidité transversale de la bande notamment lorsque cette bande est soumise à des efforts tangentiels dirigés transversalement, c'est-à-dire suivant une direction parallèle à l'axe de rotation du pneu pourvu de ladite bande.

### Définitions :

Plan médian équatorial : c'est le plan perpendiculaire à l'axe de rotation et passant par les points du pneu radialement les plus éloignés dudit axe. Ce plan divise le pneu en deux parties égales ou sensiblement égales.

Un bloc est un élément en relief formé sur la bande de roulement qui est délimité par des creux ou rainures et comprenant des parois latérales et une face de contact destinée à venir en contact avec la chaussée.

Une nervure est un élément en relief délimité par deux rainures de même orientation ; cette nervure comprend deux faces latérales et une face de contact coupant les faces latérales pour former des arêtes.

Par direction radiale, on entend dans le présent document une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle ou longitudinale, on entend une direction qui est perpendiculaire à la fois à la direction axiale et à une direction radiale. Cette direction circonférentielle est tangente à tout cercle centré sur l'axe de rotation du pneu.

### BREF EYPOSE DE L'INVENTION

La présente invention vise à résoudre le problème posé et permettre la mise en place de résonateurs ayant un volume de cavité approprié tout en limitant les effets induits de réduction de la rigidité de la bande de roulement lorsque cette bande est sollicitée transversalement.

A cet effet, l'invention a pour objet un pneu comprenant une bande de roulement ayant une surface de roulement destinée à venir en contact avec une chaussée pendant le roulage du pneu, cette bande de roulement comprenant au moins une rainure d'orientation générale circonférentielle (non nécessairement droite - elle peut être zigzagante) et une pluralité d'éléments en relief (nervure ou bloc), chacun de ces éléments en relief comprenant des parois latérales et une face de contact de largeur transversale Lt (distance mesurée entre les parois latérales de l'élément), cette face de contact formant une partie de la surface de roulement, certaines de ces parois latérales délimitant en partie les rainures d'orientation générale circonférentielle,

au moins un élément de relief étant pourvu avec une pluralité de dispositifs atténuateurs de bruit de résonance généré dans une rainure circonférentielle jouxtant ledit élément de relief,

chaque dispositif atténuateur étant formé dans un élément de relief et comprenant essentiellement une cavité de forme allongée ayant une longueur totale Lc et un volume total Vc,

cette cavité étant entièrement formée dans la bande de roulement de façon à être efficace comme dispositif atténuateur,

cette cavité s'ouvrant sur une paroi latérale délimitant la rainure circonférentielle dont on cherche à réduire le bruit de résonance,

cette cavité ayant, vue en projection sur la surface de roulement de la bande de roulement à l'état neuf, une longueur totale Lc qui est supérieure à la largeur transversale Lt de l'élément de relief, et une géométrie comprenant plusieurs parties de cavité reliées entre elles, la longueur Lc étant égale à la somme des longueurs de toutes les parties de cavité,

lesdites parties de cavité ayant une longueur totale projetée dans la direction circonférentielle égale à Lx et une longueur totale projetée dans la direction transversale égale à Ly, ces longueurs totales projetées Lx, Ly étant égales respectivement à la somme des longueurs des projections suivant la direction circonférentielle ou suivant la direction transversale de chaque partie de cavité,

chaque cavité étant prolongée sur toute sa longueur Lc par une incision s'étendant radialement vers l'extérieur pour s'ouvrir sur la surface de roulement.

Cette bande de roulement est caractérisée en ce que la longueur totale Ly projetée dans la direction transversale égale est au moins 1.5 fois plus grande que la longueur totale Lx projetée dans la direction circonférentielle.

Préférentiellement, la longueur totale Lc de la cavité est au moins égale à deux fois la largeur Lt de l'élément de relief et encore plus préférentiellement au moins égale à trois fois ; on peut envisager des longueurs de cavité bien plus grand que deux fois la largeur Lt de l'élément de relief. Ainsi pour un volume total Vc de cavité, ce volume étant déterminé en fonction de la fréquence choisie dont on cherche à réduire le bruit de résonance, il est possible de réduire la section moyenne Sc de chaque cavité. L'invention permet de répartir ce volume total de cavité de manière à induire une moindre perturbation dans les rigidités de l'élément de relief en allongeant suffisamment ladite cavité et en répartissant une plus grande partie de la longueur de cavité dans la direction transversale.

Les résonateurs selon l'invention, tout en réduisant sensiblement le bruit de résonance des rainures d'une bande de roulement, permettent d'obtenir un équilibre satisfaisant entre la rigidité longitudinale et la rigidité transversale de cette bande de roulement soumise aux sollicitations de la chaussée en roulage.

Avantageusement chaque cavité est entièrement formée dans la bande de roulement de façon à être efficace comme dispositif atténuateur au moins pour les 2/3 de la durée d'usage de la bande (c'est-à-dire que cette cavité n'apparaît pas sur la surface de roulement avant cette usure des 2/3 de l'épaisseur en partant de l'état neuf).

Les cavités selon l'invention peuvent être du type résonateur de Helmholtz ou du type résonateur quart d'onde. Dans le cas particulier d'un résonateur de Helmholtz, chaque cavité comprend une partie principale de section moyenne Sc et une partie de section réduite Sr (inférieure à la section Sc) et de longueur Lr : le volume de cette partie de section réduite représente une très petite fraction du volume total Vc. Cette partie de section réduite débouche dans la rainure dont on cherche à réduire le bruit de résonance, le volume total Vc de la cavité incluant le volume de cette partie de section réduite et la longueur Lc incluant également la longueur de cette partie de section réduite.

Pour les cavités de type quart d'onde la section Sc est constante sur toute la longueur Lc de la cavité.

Selon un mode de réalisation de l'invention l'incision prolongeant la cavité vers la surface de roulement a une largeur moyenne inférieure à 0.6 mm.

Selon un autre mode de réalisation de l'invention particulièrement avantageux pour garantir l'efficacité des résonateurs, l'incision comprend une portion d'incision prenant naissance sur la cavité et faisant un angle A d'au moins 10 degrés avec une perpendiculaire à la surface de roulement et passant par le point d'intersection de l'incision avec la cavité, de manière à ce que l'incision se ferme au moins à proximité de la cavité afin d'empêcher toute variation du volume total Vc de ladite cavité pendant le passage de ladite cavité dans le contact avec la chaussée.

Afin de satisfaire les conditions de l'invention, il est avantageux de prévoir que chaque cavité a une forme comprenant au moins deux parties d'orientation générale transversale et au moins une partie reliant entre elles ces parties d'orientation générale transversale. Plus le nombre de parties d'orientation transversale est grand et plus la longueur totale en projection sur cette direction transversale est importante devant la projection sur la direction circonférentielle et plus l'incidence de la présence de ces cavités sur la diminution de rigidité est diminuée.

De façon encore plus préférentielle, on utilise des formes de cavités comprenant au moins trois parties d'orientation transversale. La distance entre les parties d'orientation transversale est déterminée pour ne pas avoir une incidence trop marquée sur la rigidité en compression de la bande.

Afin d'obtenir un effet pérenne en bruit à l'usage, il est avantageux que, la bande de roulement étant pourvue d'indicateurs d'usure dans le fond d'au moins une rainure, cet indicateur d'usure ayant une hauteur h mesuré par rapport au fond de la rainure, chaque cavité formant résonateur comprend une génératrice supérieure située à une distance de la surface de roulement au moins égale à la profondeur des rainures diminuée de la hauteur h de l'indicateur d'usure. Ainsi chaque cavité conserve son rôle de résonateur jusqu'à ce que l'usure de la bande atteigne un niveau maximal tel qu'autorisé par les règlements routiers.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une bande de roulement selon l'art antérieur ;
La figure 2 montre une coupe selon un plan de coupe II-II de la bande selon la figure 1 ;
La figure 3 montre partiellement une bande de roulement selon l'invention comprenant une première variante de résonateur ayant la forme de la lettre H ;
La figure 4 montre une vue en perspective d'une partie de la bande montrée avec la figure 3 ;
La figure 5 montre une coupe selon une ligne V-V prise sur la bande montrée avec la figure 3 hors du contact avec une chaussée ;
La figure 6 montre la même coupe que celle de la figure 5 lors du passage dans le contact avec une chaussée ;
La figure 7 représente deux autres variantes de cavités formant résonateur ;
La figure 8 montre une autre variante de cavité ayant la forme générale de la lettre Z et formant résonateur quart d'onde.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

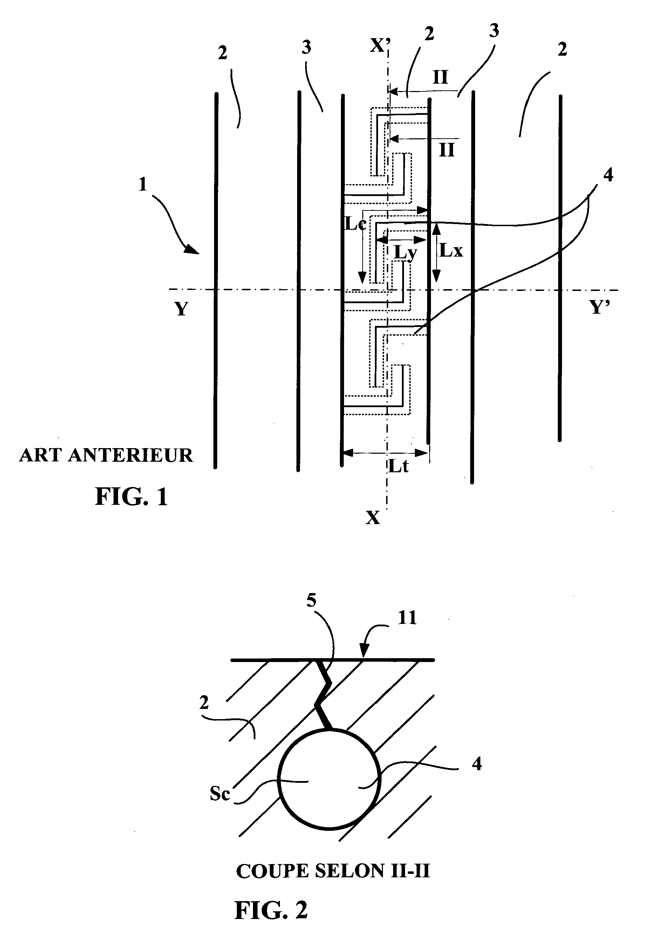

La figure 1 montre une partie d'une bande de roulement 1 selon l'art antérieur tel que décrit dans la demande publiée sous le numéro WO 2009/095288. Cette figure 1 montre trois nervures 2 d'orientation circonférentielle délimitant deux rainures 3. Chaque nervure a une largeur Lt. Pour abaisser le niveau de bruit généré par la résonance de l'air dans les deux rainures 3, il est formé dans la nervure centrale une pluralité de cavités 4 ayant la forme de la lettre « L », chacune des deux branches de cette cavité étant de longueurs sensiblement égales. Ainsi la somme Ly des projections de la longueur totale Lc de cette cavité sur la direction circonférentielle (repérée par la direction YY" sur la figure 1) est sensiblement égale à la somme Lx des projections de la longueur totale Lc de cette même cavité suivant la direction transversale (repérée par la direction XX' sur la figure 1). En fait on additionne toutes les composantes selon la direction XX' et toutes les composantes selon la direction YY' pour obtenir respectivement Lx et Ly.

La figure 2 montre une coupe selon un plan de coupe dont la trace sur la figure 1 est repérée par la ligne II-II. On voit sur cette figure 2, la nervure 2 dans la direction de son épaisseur. La cavité 4 formant résonateur a une section Sc sensiblement circulaire et est prolongée radialement vers la surface de contact 11 de la nervure 2 par une incision 5 de forme zigzag apte à se fermer lors du passage dans le contact avec la chaussée afin de permettre le contrôle du volume total Vc de la cavité 4.

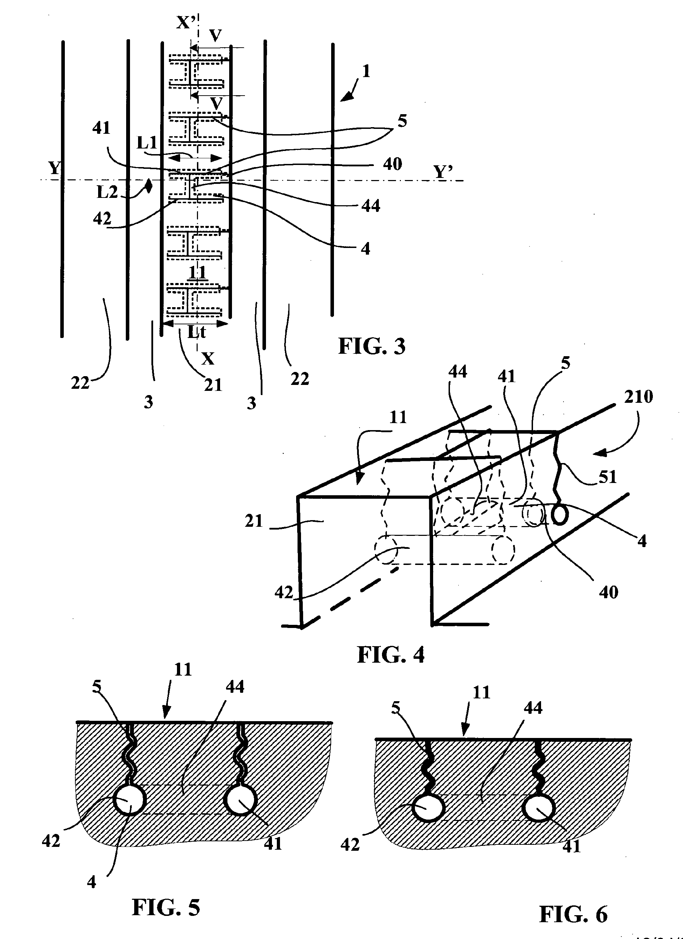

La figure 3 représente une première variante d'une bande de roulement 1 d'un pneu de dimension 225/55 R 16, cette bande étant pourvue avec une pluralité de dispositifs 4 atténuateurs de bruit de résonance selon l'invention.

Selon cette variante, la bande de roulement comprend deux rainures circonférentielles 3 délimitant une nervure centrale 21 et deux nervures de bord 22.

La nervure centrale 21 de largeur Lt égale à 35 mm est pourvue avec une pluralité de cavités 4 de longueur totale Lc, chaque cavité ayant une forme générale semblable à celle de la lettre « H », la longueur totale Lc étant égale à la somme des longueurs de toutes les branches de cette forme. La section moyenne de la cavité est de forme circulaire de diamètre égal à 3 mm. Chaque cavité 4 forme un résonateur de Helmholtz de volume total Vc, ce volume comprenant une partie 40 de longueur Lr ayant un volume Vr petit devant le volume total Vc de la cavité et de section réduite par rapport à la section Sc de la cavité. Cette partie de cavité 40 s'ouvre sur une paroi latérale 210 de la nervure centrale comme cela est visible sur la figure 4 pour réaliser un résonateur de Helmholtz.

Chaque cavité 4 comprend plusieurs parties de cavité reliées entre elles : une première partie de cavité 41 de forme linéaire est formée dans le prolongement de la partie 40 de section réduite et a une longueur L1 égale à 24 mm. Parallèlement à cette partie de cavité de longueur L1 est formée une autre partie de cavité 42 sensiblement de même longueur L1. Ces deux parties de cavité 41, 42 sont orientées parallèlement à la direction transversale YY' (donc perpendiculairement à la direction circonférentielle repérée par la direction XX').

En outre une partie de cavité 44 de longueur L2, ici égale à 28 mm est prévue pour assurer la continuité entre les volumes des parties de cavité 41, 42 de longueur L1. Cette partie de cavité 44 de longueur L2 a une section circulaire de même diamètre que la section des parties de cavité 41, 42 de longueur L1.

La longueur totale de la cavité Lc (cette longueur Lc étant égale à la somme des longueurs, que ces longueurs soient transversales ou circonférentielles, de toutes les parties de cavité 40, 41, 42, 44) est à l'évidence très supérieure à la largeur Lt de la nervure 21 mesurée dans la direction transversale (la longueur Lc est ici égale à 76 mm et Lt est égale à 33 mm).

Par ailleurs, la cavité 4 est prolongée radialement vers l'extérieur et sur toute sa longueur Lc par une incision 5 s'étendant entre les points limitant ladite cavité et situés radialement à l'extérieur de la cavité jusqu'à la face de contact 11 de la nervure 21. Cette incision 5 permet notamment le moulage et le démoulage de la cavité 4 à l'intérieur de la bande. Bien entendu, il est avantageux que cette incision 5 soit adaptée pour se fermer à proximité de la cavité 4 afin de permettre une maîtrise du volume Vc de ladite cavité lors du passage dans le contact avec une chaussée comme cela est visible avec les figures 5 et 6 qui montrent une coupe selon la ligne V-V réalisée sur la figure 3. La figure 5 montre la coupe lorsque cette partie se trouve en dehors du contact avec une chaussée tandis que la figure 6 montre la même coupe lors du passage dans le contact. Sur la figure 5, on voit chaque section des parties de cavité 41 et 42 prolongée vers la surface de roulement 11 par une incision 5 de forme ondulée dans la profondeur. Entre les parties de cavité 41 et 42 s'étend une partie de cavité 44 qui assure la continuité du volume de cavité. On voit sur la figure 6 que l'incision 5 - grâce à sa géométrie ondulée dans l'épaisseur, se ferme à proximité de la cavité 4 et sur toute la longueur Lc de la cavité 4 sous l'effet des efforts de contact avec la chaussée et assure ainsi un volume Vc de cavité constant afin de permettre ainsi à ladite cavité de jouer son rôle de résonateur.

La figure 4 montre en perspective une vue partielle de la bande de roulement montrée avec la figure 3. Sur cette figure 4, on voit une cavité 4 et plus particulièrement la partie 40 de cette cavité de section réduite s'ouvrant sur une face latérale 210 de la nervure 21 ; cette cavité 4 est prolongée radialement vers la surface de roulement 11 par une incision 5, cette dernière s'ouvrant par une partie d'incision 51 sur la face latérale 210. Dans cette variante, les cavités 4 sont formées à une profondeur appropriée pour s'ouvrir sur la surface de roulement avant la limite légale d'usure indiquée par au moins un indicateur d'usure (non représenté ici). Dans cette variante, les parties de cavité 41, 42, 44 lorsqu'elles débouchent sur la surface de roulement jouent le rôle de rainures utiles à la fois pour générer de nouvelles arêtes et pour drainer l'eau éventuellement présente dans le contact.

Dans le cas présent, la somme Ly des longueurs projetées selon la direction transversale (repérée par la direction YY' sur la figure 3) de la cavité est égale à 48 mm (deux fois la longueur L1 des parties de cavité 41, 42) tandis que la somme Lx des longueurs projetées selon la direction circonférentielle (repérée par la direction XX' sur la figure 3) est égale à 28 mm (longueur L2 de la partie 43). Le rapport Ly/Lx est ici égal à 1.7.

De cette manière, il est possible de disposer de 1.7 fois plus de longueur de cavité dans la direction transversale que dans la direction circonférentielle, ce qui est favorable d'un point de vue rigidité de la nervure. En effet, chaque cavité selon l'invention conduit à une moindre modification de la rigidité transversale de cet élément.

Dans ce premier exemple de pneu selon l'invention, chaque résonateur formé dans une nervure est entièrement formé dans la bande de roulement de façon à être efficace pour atténuer le bruit de résonance au moins pour les 2/3 de la durée d'usage de la bande (c'est-à-dire que cette cavité n'apparaît pas sur la surface de roulement avant cette usure des 2/3 de l'épaisseur en partant de l'état neuf).

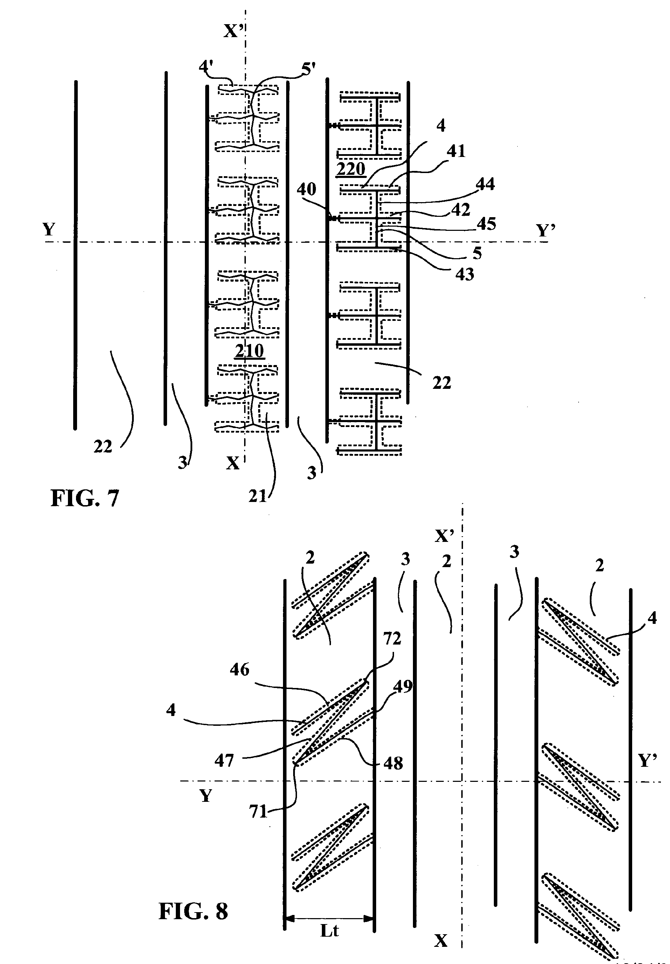

La figure 7 montre sur une même bande de roulement deux variantes de réalisation de cavités selon lesquelles deux nervures sont pourvues avec une pluralité de cavités, chaque cavité formant un résonateur de Helmholtz de volume total Vc. Sur une nervure bord 22 de la bande, chaque cavité 4 est formée de trois parties de cavités 41, 42, 43, chacune de longueur L1 orientées parallèlement à la direction transversale (axe de rotation du pneu repérée par la direction YY') et deux parties de cavité 44, 45 orientées dans la direction circonférentielle pour relier deux à deux les parties de cavité orientées transversalement. Toutes ces parties de cavité 41, 42, 43, 44, 45 ont sensiblement une même forme cylindrique circulaire (mais cette forme peut être adaptée selon le besoin). L'une des parties de cavité 42 orientée parallèlement à la direction transversale débouche sur une paroi latérale de la nervure par une partie de cavité de section réduite 40 pour mettre en communication la cavité 4 avec la rainure 2 dont on cherche à réduire le bruit de résonance. Chaque cavité 4 est prolongée radialement vers l'extérieur par une incision 5 dont l'intersection avec la surface de roulement 220 à l'état neuf reproduit la géométrie de la cavité (trois branches d'incisions parallèles à la direction transversale et deux branches circonférentielles reliant les précédentes entre elles). Ces cavités 4 ont pour fonction de réduire le bruit de résonance de la rainure 3 entre la nervure bord 22 dans laquelle elles sont formées et la nervure centrale 21.

Sur la nervure centrale, on a formé une pluralité de cavités 4' jouant le rôle de résonateurs de Helmholtz, ces cavités 4' ont sensiblement la même géométrie que les cavités 4 formées sur l'une des nervures bord précédemment décrites. La seule différence visible avec les précédentes cavités réside dans la géométrie de l'incision 5' reliant chaque cavité 4' à la face de contact de la nervure. Chaque incision 5' suit un tracé en zigzag sur la face de contact ainsi que sur toute surface à l'intérieur de la bande entre la surface de roulement et la cavité 4' ; de cette manière on augmente l'interaction des parois en vis-à-vis formée par ladite incision. À ce tracé en zigzag de l'incision 5', on superpose une géométrie en zigzag dans la direction de l'épaisseur de la bande. Par zigzag on doit aussi comprendre qu'on peut adopter toute géométrie favorisant un blocage mécanique des parois délimitant l'incision et situées en vis-à-vis l'une de l'autre. Ces cavités 4 ont pour fonction de réduire le bruit de résonance de la rainure 3 entre la nervure bord 22 dépourvue de cavités et la nervure centrale 21.

La figure 8 représente une autre variante de l'invention mettant en oeuvre des résonateurs de type quart d'onde sur une bande de roulement comprenant deux rainures circonférentielles 3 délimitées par des nervures 2 de même largeur. Les nervures axialement les plus à l'extérieur sont pourvues avec une pluralité de cavités 4 ayant chacune une forme assez proche de celle de la lettre « Z ». Dans cette variante, chaque cavité 4 a une longueur totale Lc qui est sensiblement supérieure à trois fois la largeur Lt de chaque nervure et comprend trois parties linéaires de cavité 46, 47, 48 reliées entre elles par des parties de raccord 71, 72, chaque partie de cavité 46, 47, 48 étant inclinée par rapport à la direction transversale d'un angle différent de zéro degré. Une extrémité 49 de chaque cavité s'ouvre dans la paroi latérale de chaque nervure afin que la cavité 4 forme un résonateur quart d'onde. On voit dans cette variante, qu'un grand pourcentage de la longueur totale Lc de chaque cavité est orienté dans la direction transversale (dans un rapport supérieur à 1.5). Dans cette variante, toutes les cavités 4 sont orientées de la même manière sur une même nervure et, sur l'autre nervure, dans une orientation symétrique par rapport à la direction circonférentielle XX'. On pourrait bien sûr choisir d'avoir une même orientation pour toutes les cavités quelle que soit la nervure. On peut également disposer sur une même nervure intermédiaire des cavités pour diminuer le bruit de résonance dans une rainure et des cavités pour diminuer le bruit de résonance dans une autre rainure, lesdites rainures délimitant la nervure intermédiaire. En outre, chaque cavité est prolongée par une incision apte à se fermer au voisinage de ladite cavité.

La distance entre les cavités, quelle que soit la variante considérée, est choisie de manière à concilier à la fois le besoin d'atténuer le bruit de résonance et celui de limiter la réduction de rigidité.

Bien entendu, l'invention qui vient d'être décrite au moyen de plusieurs variantes n'est pas limitée à ces seules variantes et diverses modifications peuvent y être apportées sans sortir du cadre défini par les revendications. Notamment, il est possible de combiner sur une même bande de roulement une pluralité de cavités de type résonateurs de Helmholtz et de cavités de type résonateur quart d'onde. Il est également possible d'employer de tels dispositifs atténuateurs de bruit dans le cas de rainure délimitée par une pluralité de blocs. Dans une autre variante de réalisation, chaque cavité peut être prolongée non pas vers la surface de roulement mais vers l'intérieur de la bande de roulement : ceci implique une fabrication séparée de la bande avant son incorporation au pneu.

## Revendications

1. Pneu comprenant une bande de roulement (1) ayant une surface de roulement (11) destinée à venir en contact avec une chaussée pendant le roulage du pneu, cette bande de roulement comprenant au moins une rainure (3) d'orientation générale circonférentielle et une pluralité d'éléments en relief (21, 22), chacun de ces éléments en relief comprenant une face de contact (11) de largeur transversale Lt, cette face de contact formant une partie de la surface de roulement et des parois latérales (210), certaines de ces parois latérales délimitant en partie les rainures d'orientation générale circonférentielle, au moins un élément de relief étant pourvu avec une pluralité de dispositifs atténuateurs de bruit de résonance généré dans une rainure circonférentielle, chaque dispositif étant formé dans un élément de relief et comprenant une cavité (4) de forme allongée ayant une longueur totale Lc et un volume total Vc, cette cavité (4) étant entièrement formée dans la bande de roulement, cette cavité s'ouvrant sur une paroi latérale (210) délimitant la rainure circonférentielle dont on cherche à réduire le bruit de résonance, cette cavité (4) ayant une longueur totale Lc qui est supérieure à la largeur transversale Lt de l'élément de relief et une géométrie comprenant plusieurs parties de cavité (40, 41, 42, 43, 44, 45) reliées entre elles, la longueur Lc étant égale à la somme des longueurs de toutes les parties de cavité, ces parties de cavité ayant une longueur totale projetée dans la direction circonférentielle égale à Lx et une longueur totale projetée dans la direction transversale égale à Ly, les longueurs totales projetées Lx, Ly étant égales respectivement à la somme des longueurs des projections sur la direction circonférentielle ou sur la direction transversale de chaque partie de cavité, chaque cavité (4) étant prolongée sur toute sa longueur Lc par une incision (5) s'étendant radialement vers l'extérieur pour s'ouvrir sur la surface de roulement, cette bande de roulement étant **caractérisée en ce que** la somme Ly des longueurs projetées dans la direction transversale de chaque cavité est au moins 1.5 fois plus grande que la somme Lx des longueurs projetées dans la direction circonférentielle de chaque cavité.

2. Pneu selon la revendication 1 **caractérisé en ce que** la longueur totale Lc de chaque cavité d'un élément de relief est au moins égale à deux fois la largeur transversale Lt dudit élément de relief.

3. Pneu selon la revendication 1 ou la revendication 2 **caractérisé en ce que** l'incision (5) a une largeur moyenne inférieure à 0.6 mm.

4. Pneu ayant une bande de roulement selon l'une des revendications 1 à 3 **caractérisé en ce que** l'incision (5) comprend une portion d'incision (51) prenant naissance sur la cavité et faisant un angle A d'au moins 10 degrés avec une perpendiculaire à la surface de roulement et passant par le point d'intersection de l'incision avec la cavité, de manière à ce que l'incision (5) se ferme au moins à proximité de la cavité (6) afin de réaliser la conservation du volume total Vc de ladite cavité (6) pendant le passage de ladite cavité (6) dans le contact avec la chaussée.

5. Pneu ayant une bande de roulement selon l'une des revendications 1 à 4 **caractérisé en ce qu'**au moins une cavité a une forme comprenant au moins deux parties d'orientation générale transversale et au moins une partie reliant entre elles ces parties d'orientation générale transversale.

6. Pneu ayant une bande de roulement selon l'une des revendications 1 à 5 **caractérisé en ce que** la bande de roulement étant pourvue d'un indicateur d'usure (22) dans le fond d'au moins une rainure (2), cet indicateur d'usure (22) ayant une hauteur h mesuré par rapport au fond de la rainure, chaque cavité (6) comprend une génératrice supérieure (65) située à une distance de la surface de roulement au moins égale à la profondeur des rainures (2) diminuée de la hauteur h de l'indicateur d'usure.

7. Pneu selon l'une quelconque des revendications 1 à 6 **caractérisé en ce qu'**au moins certaines cavités forment des résonateurs de Helmholtz.

8. Pneu selon l'une quelconque des revendications 1 à 6 **caractérisé en ce qu'**au moins certaines cavités sont des résonateurs quart d'onde.

9. Pneu selon l'une quelconque des revendications 1 à 8 **caractérisé en ce que** chaque cavité (4) est formée dans l'épaisseur de la bande de roulement de façon à être efficace au moins pour les 2/3 de la durée d'usage de la bande.

## Patentansprüche

1. Reifen, der eine Laufdecke (1) aufweist, die eine Lauffläche (11) aufweist, die dazu bestimmt ist, mit einer Fahrbahn während des Laufens des Reifens in Berührung zu kommen, wobei diese Laufdecke mindestens eine Rille (3) mit allgemein umfänglicher Ausrichtung sowie eine Mehrzahl von Elementen im Relief (21, 22) aufweist, wobei jedes dieser Elemente im Relief eine Kontaktseite (11) mit Querbreite Lt aufweist, wobei diese Kontaktseite einen Teil der Lauffläche bildet, und Seitenwände (210), wobei bestimmte dieser Seitenwände zum Teil die Rillen mit allgemein umfänglicher Ausrichtung abgrenzen, wobei mindestens ein Reliefelement mit einer Mehrzahl von Dämpfungsvorrichtungen von Resonanzgeräuschen, die in einer umfänglichen Rille erzeugt werden, versehen ist, wobei jede Vorrichtung in einem Reliefelement ausgebildet ist und einen Hohlraum (4) mit gestreckter Form aufweist, der eine Gesamtlänge Lc und ein Gesamtvolumen Vc hat, wobei dieser Hohlraum (4) vollständig in der Laufdecke ausgebildet ist, wobei sich dieser Hohlraum auf eine Seitenwand (210) öffnet, die die umfängliche Rille abgrenzt, deren Resonanzgeräusch man zu verringern sucht, wobei dieser Hohlraum (4) eine Gesamtlänge Lc hat, die größer ist als die Querbreite Lt des Reliefelements, sowie eine Geometrie, die mehrere Hohlraumteile (40, 41, 42, 43, 44, 45) aufweist, die untereinander verbunden sind, wobei die Länge Lc gleich der Summe der Längen aller Hohlraumteile ist, wobei diese Hohlraumteile eine Gesamtlänge in die Umfangsrichtung projiziert gleich Lx und eine Gesamtlänge in die Querrichtung projiziert gleich Ly haben, wobei die projizierten Gesamtlängen Lx, Ly jeweils gleich der Summe der Längen der Projektionen auf die Umfangsrichtung oder auf die Querrichtung jedes Hohlraumteils sind, wobei jeder Hohlraum (4) auf seiner gesamten Länge Lc durch einen Einschnitt (5) verlängert ist, der sich radial nach außen erstreckt, um sich auf der Lauffläche zu öffnen, wobei diese Laufdecke **dadurch gekennzeichnet ist, dass** die Summe Ly der in die Querrichtung jedes Hohlraums projizierten Längen mindestens 1,5 Mal größer ist als die Summe Lx der in die Umfangsrichtung jedes Hohlraums projizierten Längen.

2. Reifen nach Anspruch 1, **dadurch gekennzeichnet, dass** die Gesamtlänge Lc jedes Hohlraums eines Reliefelements mindestens gleich zwei Mal der Querlänge Lt des Reliefelements ist.

3. Reifen nach Anspruch 1 oder Anspruch 2, **dadurch gekennzeichnet, dass** der Einschnitt (5) eine mittlere Breite kleiner als 0,6 mm hat.

4. Reifen mit einer Laufdecke nach einem der Ansprüche 1 bis 3, **dadurch gekennzeichnet, dass** der Einschnitt (5) einen Einschnittabschnitt (51) aufweist, der auf dem Hohlraum beginnt und einen Winkel A von mindestens 10 Grad mit einer Senkrechten zu der Lauffläche bildet und durch den Schnittpunkt des Einschnitts mit dem Hohlraum derart verläuft, dass sich der Einschnitt (5) mindestens in der Nähe des Hohlraums (6) schließt, um die Wahrung des Gesamtvolumens Vc des Hohlraums (6) während der Passage des Hohlraums (6) in der Berührung mit der Fahrbahn herzustellen.

5. Reifen, der eine Laufdecke nach einem der Ansprüche 1 bis 4 hat, **dadurch gekennzeichnet, dass** mindestens ein Hohlraum eine Form hat, die mindestens zwei Teile mit allgemeiner Querausrichtung und mindestens einen Teil, der diese Teile mit allgemeiner Querausrichtung verbindet, aufweist.

6. Reifen, der eine Laufdecke nach einem der Ansprüche 1 bis 5 hat, **dadurch gekennzeichnet, dass** die Laufdecke mit einem Abnutzungsindikator (22) in dem Grund mindestens einer Rille (2) versehen ist, wobei dieser Abnutzungsindikator (22) ab dem Grund gemessen eine Höhe h hat, wobei jeder Hohlraum (6) eine obere Mantellinie (65) aufweist, die sich in einer Entfernung von der Lauffläche befindet, die mindestens gleich der Tiefe der Rillen (2) abzüglich der Höhe h des Abnutzungsindikators ist.

7. Reifen nach einem der Ansprüche 1 bis 6, **dadurch gekennzeichnet, dass** mindestens bestimmte Hohlräume Helmholtz-Resonatoren bilden.

8. Reifen nach einem der Ansprüche 1 bis 6, **dadurch gekennzeichnet, dass** mindestens bestimmte Hohlräume Viertelwellenresonatoren sind.

9. Reifen nach einem der Ansprüche 1 bis 8, **dadurch gekennzeichnet, dass** jeder Hohlraum (4) in der Stärke der Laufdecke derart ausgebildet ist, dass er mindestens für 2/3 der Verwendungsdauer der Laufdecke effizient ist.

## Claims

1. Tyre comprising a tread (1) having a running surface (11) designed to come into contact with a roadway when the tyre is running, this tread comprising at least one groove (3) of generally circumferential orientation and a plurality of relief elements (21, 22), each of these relief elements comprising a contact face (11) with a transverse width Lt, this contact face forming a portion of the running surface and of the lateral walls (210), certain of these lateral walls partly delimiting the grooves of generally circumferential orientation, at least one relief element being provided with a plurality of devices for attenuating resonance noise generated in a circumferential groove, each device being formed in a relief element and comprising a cavity (4) of elongate shape having a total length Lc and a total volume Vc, this cavity (4) being entirely formed in the tread, this cavity opening onto a lateral wall (210) delimiting the circumferential groove the resonance noise of which it is sought to reduce, this cavity (4) having a total length Lc which is greater than the transverse width Lt of the relief element, and a geometry comprising several cavity portions (40, 41, 42, 43, 44, 45) connected together, the length Lc being equal to the sum of the lengths of all the cavity portions, these cavity portions having a total length projected in the circumferential direction equal to Lx and a total length projected in the transverse direction equal to Ly, the projected total lengths Lx, Ly being equal respectively to the sum of the lengths of the projections in the circumferential direction or in the transverse direction of each cavity portion, each cavity (4) being extended over the whole of its length Lc by a sipe (5) extending radially outwards in order to open onto the running surface, this tread being **characterized in that** the sum Ly of the lengths projected in the transverse direction of each cavity is at least 1.5 times greater than the sum Lx of the lengths projected in the circumferential direction of each cavity.

2. Tyre according to Claim 1, **characterized in that** the total length Lc of each cavity of a relief element is at least equal to twice the transverse width Lt of the said relief element.

3. Tyre according to Claim 1 or Claim 2, **characterized in that** the sipe (5) has an average width of less than 0.6 mm.

4. Tyre having a tread according to one of Claims 1 to 3, **characterized in that** the sipe (5) comprises a sipe portion (51) originating on the cavity and forming an angle A of least 10 degrees with a perpendicular to the running surface and passing through the point of intersection of the sipe with the cavity, so that the sipe (5) is closed at least close to the cavity (6) in order to conserve the total volume Vc of the said cavity (6) when the said cavity (6) comes into contact with the roadway.

5. Tyre having a tread according to one of Claims 1 to 4, **characterized in that** at least one cavity has a shape comprising at least two portions of generally transverse orientation and at least one portion connecting these portions of generally transverse orientation together.

6. Tyre having a tread according to one of Claims 1 to 5, **characterized in that**, since the tread is provided with a wear indicator (22) in the bottom of at least one groove (2), this wear indicator (22) having a height h measured relative to the bottom of the groove, each cavity (6) comprises an upper generatrix (65) situated at a distance from the running surface that is at least equal to the depth of the grooves (2) minus the height h of the wear indicator.

7. Tyre according to any one of Claims 1 to 6, **characterized in that** at least certain cavities form Helmholtz resonators.

8. Tyre according to any one of Claims 1 to 6, **characterized in that** at least certain cavities are quarter-wave resonators.

9. Tyre according to any one of Claims 1 to 8, **characterized in that** each cavity (4) is formed in the thickness of the tread so as to be effective at least for 2/3 of the period of usage of the tread.
